# EUROPÄISCHE PATENTSCHRIFT

(11) **EP 3 520 158 B1**
(45) Veröffentlichungstag und Bekanntmachung des Hinweises auf die Patenterteilung: **22.11.2023**
(21) Anmeldenummer: 17790684.9
(22) Anmeldetag: 25.09.2017
(51) Int. Cl.: H01M 4/04, H01M 4/134, H01M 4/1395, H01M 4/13, H01M 4/38, H01M 4/1393, H01M 4/62, H01M 4/66, H01M 4/75, H01M 10/0525, H01M 4/02, H01M 4/80

(54) **ELEKTRODE FÜR EINEN LITHIUM-IONEN-AKKUMULATOR BZW. VORRICHTUNG UND VERFAHREN ZUM UMFORMEN VON NANO-FILAMENTEN ZUR VERWENDUNG IN EINEM LITHIUM-IONEN-AKKUMULATOR**
ELECTRODE FOR A LITHIUM-ION BATTERY AND DEVICE AND METHOD FOR PRODUCING SAID ELECTRODE
ÉLECTRODE POUR ACCUMULATEUR AUX IONS DE LITHIUM ET DISPOSITIF ET PROCÉDÉ DE FABRICATION DE LADITE ÉLECTRODE

(30) Priorität: 29.09.2016 DE 102016118404
(43) Veröffentlichungstag der Anmeldung: 07.08.2019
(73) Patentinhaber: Aixtron SE, 52134 Herzogenrath (DE)
(72) Erfinder: SCHINELLER, Bernd, 52074 Aachen (DE); TEO, Kenneth B. K., Cambridge Cambridgeshire CB23 5BH (GB); RUPESINGHE, Nalin Lalith, Cambridge Cambridgeshire CB4 3NB (GB)
(74) Vertreter: Grundmann, Dirk
(86) Internationale Anmeldenummer: PCT/EP2017/074183
(87) Internationale Veröffentlichungsnummer: WO 2018/060118

(56) Entgegenhaltungen:
- DE-A1-102013 112 578
- DE-A1-102013 112 578
- JP-A- 2004 362 919
- JP-A- 2004 362 919
- US-A1- 2009 121 182
- US-A1- 2009 121 182
- US-A1- 2013 244 107
- JIANGUO FAN ET AL: "Nanocarpet Effect Induced Superhydrophobicity", LANGMUIR, Bd. 26, Nr. 11, 3. Oktober 2010 (2010-10-03), Seiten 8245-8250, XP055427200, US ISSN: 0743-7463, DOI: 10.1021/la9046319
- AURÉLIEN GOHIER ET AL: "High-Rate Capability Silicon Decorated Vertically Aligned Carbon Nanotubes for Li-Ion Batteries", ADVANCED MATERIALS, Bd. 24, Nr. 19, 10. April 2012 (2012-04-10), Seiten 2592-2597, XP055462153, DE ISSN: 0935-9648, DOI: 10.1002/adma.201104923
- JIANGUO FAN ET AL: "Nanocarpet Effect Induced Superhydrophobicity", LANGMUIR, vol. 26, no. 11, 1 June 2010 (2010-06-01), pages 8245-8250, XP055427200, US ISSN: 0743-7463, DOI: 10.1021/la9046319

## Beschreibung

### Gebiet der Technik

Die Erfindung betrifft ein Verfahren zum Umformen von gleichmäßig über die Oberfläche eines Trägers angeordneten Nano-Filamenten, die jeweils ein festes mit dem Träger verbundenes Ende und ein freies Ende aufweisen, zu bündeln, sodass die freien Enden einer Mehrzahl benachbarter Nano-Filamente zusammengeformt aneinander anliegen und die Bündel durch Abstandsräume voneinander getrennt sind.

### Stand der Technik

Ein Lithium-Ionen-Akkumulator besteht im Wesentlichen aus einer zwei durch eine poröse Trennwand voneinander getrennte Volumina, in denen ein Lithium-Ionen enthaltenes Elektrolyt angeordnet ist. Die Kathode, die aus Kupfer bestehen kann, besitzt baumartige Kohlenstoff-Nanoröhrchen, die mit Silizium beschichtet sind. Die Siliziumschicht bildet eine Ionen aufnehmende Belegung, in der unter Vergrößerung ihres Volumens Lithium-Kationen aufgenommen werden können.

Die US 2013/0244107 A1 beschreibt einen elektrisch leitenden Träger für Elektroden für Lithium-Ionen-Akkumulatoren. Auf der Oberfläche des Trägers befinden sich aus Kohlenstoff bestehende Filamente, auf die eine Siliziumschicht aufgebracht ist. Die Filamente haben eine Ionen aufnehmende Funktion.

Die US 2012/ 0126449 A1 beschreibt ein Verfahren zum Bündeln von Kohlenstoff-Nanoröhrchen, die als im statistischen Mittel gleichmäßig über die Oberfläche eines Trägers angeordnet sind. Durch ein Benetzen der Nano-Filamente und einem anschließenden Trocknen bilden sich durch Kapillarkräfte Bündel von Nano-Filamenten aus. Dabei treten mehrere unmittelbar benachbarte Nano-Filamente mit ihren freien Enden in eine Berührung gegeneinander. Zwischen zwei unmittelbar benachbart liegenden Bündeln entsteht ein Freiraum.

Ein ähnliches Verfahren wurde in dem Artikel "Nanocarpet Effect Induced Superhydrophobicity", Jianguo Fan and Yiping Zhao, Langmuir 2010, 26 (11), 8245-8250 beschrieben.

JP 2004-362919 A beschreibt ein Verfahren zur Strukturierung von Nano-Filamenten unter Verwendung eines Lasers.

Die US 8,540,922 B2 und US 9,064,614 B2 beschreiben Verfahren, mit denen Kohlenstoff-Nanoröhrchen (CNT) auf einen elektrisch leitenden Träger abgeschieden werden und Strukturen mittels eines Laserstrahls erzeugt werden. Mit dem Laserstrahl sollen chemische Bindungen aufgebrochen werden, so dass in der gleichmäßigen Flächenverteilung der Nano-Filamente Lücken eingeschnitten werden.

Silizium hat bei der Fertigung der Elektroden für Lithium-Ionen-Akkumulatoren den Vorteil, dass es etwa zehnmal so viel Lithium pro Volumen aufnehmen kann, wie Kohlenstoff. Eine Beschichtung mit einkristallinem oder polykristallinem Silizium hat jedoch den Nachteil, dass die Schicht nach mehreren Ladezyklen zerstört wird, da mit der Aufnahme von Lithium-Ionen eine Volumenvergrößerung einhergeht.

Verfahren zur Bündelung von CNTs beschreiben darüber hinaus die Artikel im PNAS "Capillarity-driven assembly of two-dimensional cellular carbon nanotube foams", March 23, 2004/Vol. 101/No. 12/4009-4012 und "Behavior of fluids in nanoscopic space", April 27, 2004/Vol. 101/No. 17/6331-6332.

### Zusammenfassung der Erfindung

Der Erfindung liegt die Aufgabe zugrunde, das Verfahren zur Bündelung der Nano-Filamente technologisch zu verbessern und eine hierzu geeignete Vorrichtung anzugeben.

Gelöst wird die Aufgabe durch die in den Ansprüchen angegebene Erfindung. Zunächst und im Wesentlichen wird vorgeschlagen, dass die Bündelung durch Beaufschlagung der Nano-Filamente durch Energie in Form von Licht erfolgt.

Zunächst und im Wesentlichen wird vorgeschlagen, dass die Nano-Filamente zu einer Vielzahl von jeweils eine Mehrzahl von Nano-Filamenten aufweisenden Bündeln zusammengeformt sind. Jedes Bündel enthält Nano-Filamente, die mit einem festen Ende mit dem elektrisch leitenden Träger verbunden sind und deren freies Ende an freien Enden anderer benachbarter Nano-Filamente anliegen. Hierdurch entstehen getreidegarbenartige, in der Draufsicht auf die mit den Nano-Filamenten beschichteten Fläche kreisförmige oder linienförmige Strukturen, die durch Abstandsräume voneinander getrennt sind. Bei der Belegung werden die filigranen Außenwände der Bündel mit der Ionen aufnehmenden Belegung versehen. Die Nano-Filamente sind bevorzugt Kohlenstoff-Nanoröhrchen. Die in der Draufsicht gemessene Querschnittsstrecke durch ein Bündel, also beispielsweise der Durchmesser einer kreisäquivalenten Grundfläche, kann zwischen 0,5 und 5 µm betragen. Bevorzugt beträgt die Querschnittsstrecke durch ein Bündel 1,5 bis 2,5 µm. Benachbarte Bündel sind im Bereich der freien Enden der Nano-Filamente etwa um 1,5 bis 2,5 µm voneinander entfernt. Im Bereich der freien Enden ist die Querschnittsstrecke durch ein Bündel weniger als die Hälfte so lang wie die Querschnittsstrecke im Bereich der festen Enden der Filamente eines Bündels. Die Ionen aufnehmende Belegung ist insbesondere eine Belegung mit Nanopartikeln. Diese Nanopartikel können in die Abstandsräume zwischen den Bündeln eingesprüht werden. Als Nanopartikel kommen insbesondere Silizium-Partil<el, Schwefelpartikel, Titan-Oxyd-Partikel oder 3D-Metallpartikel in Betracht. Bei dem Verfahren zur Herstellung einer erfindungsgemäßen Elektrode wird zunächst ein Träger bereitgestellt, bei dem es sich um einen Metallträger, bspw. um eine Aluminiumfolie oder um eine Kupferfolie handeln kann. Auf diesem Träger wird eine Schicht aus Nano-Filamenten aufgebracht. Dies erfolgt bevorzugt in einem CVD-Prozess, welcher ein Wachstumsprozess ist, bei dem die Nano-Filamente, bei denen es sich bevorzugt um Kohlenstoff-Nanoröhrchen handelt, von der Oberfläche des Trägers wegwachsen, so dass eine im statistischen Mittel gleichmäßige Anordnung der Nano-Filamente über die Oberfläche erzeugt wird. Die zur Durchführung des Verfahrens verwendete Vorrichtung besitzt hierzu eine erste Beschichtungsstation, bei der es sich um einen CVD-Reaktor handeln kann. In einem nachfolgenden Schritt, der bei der Bearbeitungseinrichtung in einer Umformungsstation erfolgt, werden die Nano-Filamente zu Bündeln zusammengeformt. Die Erfinder der vorliegenden Anmeldung haben den überraschenden Effekt gefunden, dass sich Nano-Filamente durch die Beaufschlagung mit Licht zu Bündeln zusammenformen. Bei einem bevorzugten Verfahren wird deshalb zur Bündelung Licht verwendet, mit dem die Nano-Filamente belichtet werden. Das Licht kann von einer Lampe, insbesondere einer Xenon-Lampe, erzeugt werden. Das Licht kann von einem Laser erzeugt werden. Bei dem Laser kann es sich um einen gepulsten oder kontinuierlich betriebenen Laser handeln. Es kann sich um einen Xenon-Laser, einen Dioden-Laser, einen Gas-Laser, einen Infrarot-Laser, einen UV-Laser oder um einen Excimer-Laser handeln. Wird das Licht von einem Laserstrahl erzeugt, so wird der Laserstrahl bevorzugt aufgeweitet. Bei der Aufweitung kann es sich um eine linienförmige Aufweitung handeln. Das Licht und insbesondere der Laserstrahl wandern in einer bevorzugt gleichbleibenden Geschwindigkeit über die Schicht, so dass sich die freien Enden der Filamente zu Bündeln miteinander verbinden können. In einem darauffolgenden Schritt, der bei der Bearbeitungseinrichtung von einer Beschichtungsstation durchgeführt wird, wird eine Ionen aufnehmende Belegung auf die Bündel aufgebracht. Hierzu werden bevorzugt Nanopartikel verwendet. Die Nanopartikel, bei denen es sich bevorzugt um Silizium-Partikel handelt, können nass oder trocken auf die Oberfläche des Trägers aufgesprüht werden. Hierzu besitzt die Bearbeitungseinrichtung bevorzugt eine Düsenanordnung, bspw. eine Sprühvorrichtung. In einem weiteren Verfahrensschritt können die auf die Bündel aufgebrachten Nanopartikel mit sich selbst und/oder mit den Nanofilamenten verbunden werden. Dies erfolgt bevorzugt in der zweiten Beschichtungsstation. Hierzu kann die zweite Beschichtungsstation eine Lichtquelle, eine Heizung oder eine andere Energiebeaufschlagungseinrichtung aufweisen, mit der die Nanopartikel miteinander und/ oder mit den darunter liegenden Nanofilamenten versintert werden. Bevorzugt besitzt die Beschichtungsstation hierzu einen Laser, der einen aufgeweiteten Laserstrahl erzeugt, der in gleichmäßiger Geschwindigkeit über den Träger wandert. In einer bevorzugten Variante besitzt die Bearbeitungseinrichtung eine Vielzahl unmittelbar in einer Transportrichtung des Trägers hintereinander angeordnete Bearbeitungsstationen, durch die ein von einer Rolle abgewickelter Träger kontinuierlich hindurchläuft. Die im Durchlaufverfahren gefertigte Elektrode wird auf einer zweiten Rolle aufgewickelt. Eine mit Silizium-Partikeln belegte Elektrode kann als Anode und eine mit einem anderweitigen Material, bspw. Schwefel oder Titan-Oxyd belegte Elektrode kann als Kathode bei einem Lithium-Ionen-Akkumulator verwendet werden. Die Länge der einzelnen Nano-Filamente kann zwischen 20 µm und 200 µm betragen. Der Durchmesser der einzelnen Nano-Filamente kann im Bereich zwischen 1 nm und 200 nm, bevorzugt zwischen 5 nm und 100 nm, liegen. Das Abscheiden insbesondere von Kohlenstoff-Nanoröhrchen erfolgt in einem selbst organisierenden System auf dem leitfähigen Substrat. Es ist aber auch möglich, die Kohlenstoff-Nanoröhrchen auf einem mit einer Keimstruktur, bspw. mit Keimpartikeln vorstrukturierten Substrat abzuscheiden. Bevorzugt wird in diesem Prozessschritt ein im Wesentlichen kontinuierlicher Wald nebeneinander angeordneter Kohlenstoff-Nanoröhrchen erzeugt. Diese Kohlenstoff-Nanoröhrchen werden dann in einem weiteren Prozessschritt insbesondere durch die Lichtbeaufschlagung zu Bündeln zusammengefasst. Die typischen Durchmesser der Bündel liegen zwischen 200 nm und 10 µm. Die Nanopartikel, mit denen die gebündelten Nano-Filamente belegt werden, besitzen charakteristische Durchmesser im Bereich zwischen 1 nm und 500 nm, bevorzugt zwischen 20 nm und 200 nm. Die Nano-Filamente werden bevorzugt mit 5 g/m² bis 50 g/m² auf den Träger aufgebracht. Die Laserleistung, mit der der Xenon-Laser betrieben wird, beträgt etwa 1 mJ bis 100 mJ. Beim Behandeln der Nanopartikel mit einem Laserstrahl werden deren Oberflächen angeschmolzen, so dass sich benachbarte Nanopartikel durch Anschmelzen ihrer Oberflächen miteinander und/ oder mit den Bündeln aus Nanofilamenten verbinden. Als erste Beschichtungsstation wird bevorzugt eine Prozesskammer verwendet, innerhalb welcher der Beschichtungsprozess bei einem Totaldruck von 100 mbar bis 1100 mbar durchgeführt werden kann. Als Inertgase werden typischerweise Argon, Stickstoff oder Wasserstoff verwendet. Die CNT-Abscheidung erfolgt bevorzugt bei 200° C bis 1000° C. Die Belegung der Bündel mit Silicium-Nanopartikeln erfolgt bei Temperaturen zwischen Raumtemperatur und 250° C, bevorzugt bei Temperaturen zwischen Raumtemperatur und 150° C. Das Laserlicht kann innerhalb der Vorrichtung erzeugt werden. Das Laserlicht kann mittels optischer Leitungen von einem entfernten Lasergerät zur Vorrichtung geleitet werden. Die Nanopartikel können bevorzugt trocken auf die Nano-Filamente aufgebracht werden. Bei den Nanopartikeln kommen neben Si auch SiO₂, TiO₂, CrO₂, S, LiCoO, LiTiO, LiNiO, LiMnO, LiFePO, LiCoPO, LiMnPO, V₂O₅, Ge, Sn, Pb, ZnO in Frage.

Die Erfindung betrifft darüber hinaus ein Verfahren zur Bündelung auf einem Träger aufgebrachter Nano-Filamente. Die Bündelung erfolgt durch Beaufschlagung der Nano-Filamente durch Energie in Form von Licht, wobei das Licht nicht nur den sichtbaren Teil des Spektrums sondern auch die daran angrenzenden ultravioletten Teile und Infrarotteile des Spektrums umfasst.

Die Erfindung betrifft darüber hinaus eine Vorrichtung zur Bündelung der Nano-Filamente und insbesondere eine Vorrichtung zur Erzeugung einer Elektrode, wie sie in der US 8,420,258 B2 beschrieben wird. Ein elektrisch leitender Träger, bei dem es sich um eine Metallfolie handeln kann, die unbeschichtet oder vorbeschichtet sein kann, wird mittels Transportmitteln in einer Transportrichtung durch die Vorrichtung hindurchtransportiert. Der Träger kann von einer ersten Rolle abgewickelt und auf einer zweiten Rolle wieder aufgewickelt werden. Zwischen den beiden Rollen befindet sich die Vorrichtung, durch die der Träger hindurchtransportiert wird. Die Vorrichtung besitzt eine Bearbeitungseinrichtung, bei der in der Transportrichtung die folgenden Bearbeitungsstationen hintereinander angeordnet sind: Eine erste Beschichtungsstation, in der die Nano-Filamente auf den Träger aufgebracht werden. Diese Beschichtungsstation kann eine CVD-Prozesskammer aufweisen, in der die Nano-Filamente auf dem Träger abgeschieden werden. Dabei entsteht ein Wald im Wesentlichen gleichmäßig über die Fläche des Trägers verteilt angeordneter Nano-Filamente. Es ist aber auch möglich, bspw. mit Hilfe einer zuvor auf den Träger abgeschiedenen Keimstruktur das Wachstum der Nano-Filamente auf strukturierte Bereiche, bspw. voneinander beabstandete Zonen, zu beschränken. Die Zonen können bspw. gleichmäßig verteilte Inseln sein. Die auf den Träger abgeschiedenen Nano-Filamente können insbesondere einzeln stehende Nano-Filamente sein. Die abgeschiedenen Nano-Filamente können ausreichend weit voneinander beabstandet sein, dass sie sich nicht gegenseitig berühren. In einem darauffolgenden Schritt wird in einer zweiten Beschichtungsstation die oben beschriebene Belegung auf die Nano-Filamente aufgebracht. Dabei werden zunächst Nanopartikel, insbesondere Silizium-Partikel, auf die Nano-Filamente aufgebracht. Dies kann mit einer Sprühvorrichtung erfolgen, mit der die Nanopartikel trocken, mit einem Gasstrom oder flüssig, mit einem Flüssigkeitsstrom aus einer Düsenanordnung in eine Prozesskammer eingebracht werden. Durch die Prozesskammer wird der mit den Nano-Filamenten beschichtete Träger hindurchtransportiert. Die Nanopartikel lagern sich auf den Nano-Filamenten ab. In einem darauffolgenden Schritt können die Nanopartikel untereinander und mit den Nano-Filamenten versintert werden. Dies erfolgt durch Energiebeaufschlagung, wobei die Energie ausreichend groß ist, um die Nanopartikel vorzugsweise an ihrer Oberfläche anzuschmelzen, so dass sie sich mit benachbarten Nanopartikeln und mit den Filamenten verbinden können. Als Energiequelle kann ein Laser oder eine anderweitige Lichtquelle, aber auch eine Heizung, bspw. Strahlungsheizung, verwendet werden. Die einzelnen Stationen, nämlich die erste Beschichtungsstation, eine Nanopartikel-Aufbringstation und eine Anschmelzstation, können in Transportrichtung unmittelbar hintereinander angeordnet sein. Sie können in einem gemeinsamen Gehäuse angeordnet sein. Sie können aber auch in einem voneinander getrennten Gehäuse angeordnet sein. Zwischen den einzelnen voneinander getrennten Gehäusen können gasgespülte Tore vorgesehen sein.

Der Träger kann entweder nur auf einer seiner beiden sich gegenüberliegenden Breitseiten mit den zuvor beschriebenen Strukturen versehen werden. Es ist aber auch vorgesehen, dass der Träger beidseitig die zuvor beschriebenen Strukturen erhält. Das Aufbringen der Strukturen kann gleichzeitig auf den beiden Breitseiten erfolgen. Es ist aber auch vorgesehen, die Strukturen nacheinander auf den beiden Breitseiten aufzubringen.

### Kurze Beschreibung der Zeichnungen

Im Folgenden wird die Erfindung anhand von Ausführungsbeispielen näher erläutert. Es zeigen:
- Fig. 1: schematisch die Prozessfolge zur Herstellung der erfindungsgemäßen Elektrode,
- Fig. 2: eine schematische Darstellung eines ersten Ausführungsbeispiels einer Vorrichtung zur Durchführung des Verfahrens,
- Fig. 3: ein zweites Ausführungsbeispiel einer Vorrichtung,
- Fig. 4: ein drittes Ausführungsbeispiel einer Vorrichtung,
- Fig. 5: eine Darstellung gemäß Figur 1 betreffend ein zweites Ausführungsbeispiel eines Verfahrens bzw. einer Vorrichtung zur Herstellung einer Elektrode,
- Fig. 6: ein weiteres Ausführungsbeispiel einer Vorrichtung zur Durchführung des in der Figur 5 schematisch dargestellten Verfahrens und
- Fig. 7: schematisch eine Zelle eines Lithium-Ionen Akkumulators.

### Beschreibung der Ausführungsformen

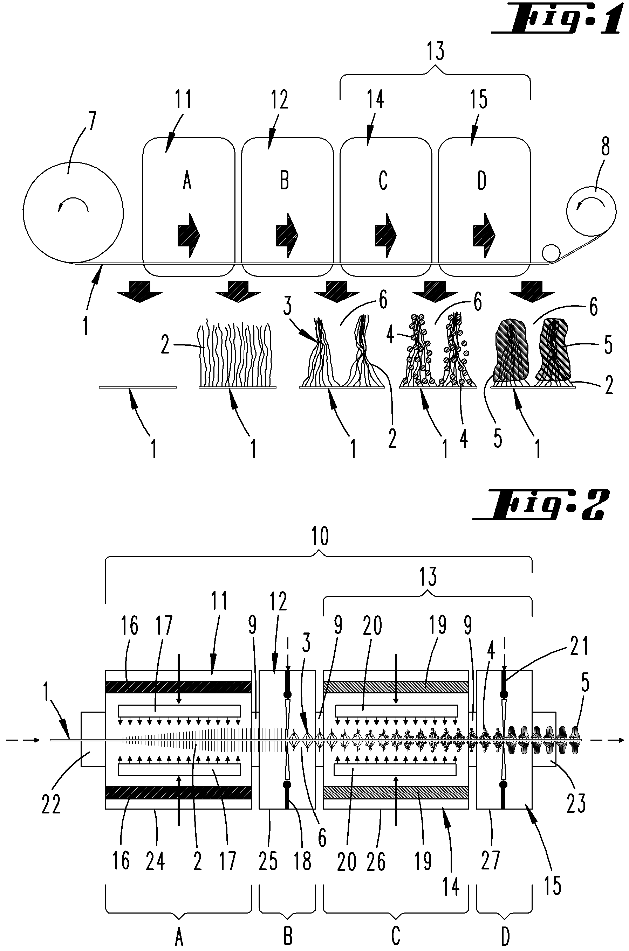

Die Figur 1 zeigt schematisch die Prozessabfolge zur Herstellung einer Elektrode für einen Lithium-Ionen-Akkumulator. Von einer ersten Rolle 7 wird ein metallischer dünner Träger, beispielsweise eine Aluminium- oder bevorzugt eine Kupferfolie abgewickelt und in vier aufeinanderfolgenden Prozessschritten A, B, C, D mit einer Mikrostruktur beschichtet. Der beschichtete Träger 1 wird dann auf einer zweiten Rolle 8 wieder aufgewickelt.

In einem ersten Prozessschritt A wird der Träger 1 mit Kohlenstoff-Nanoröhrchen 2 beschichtet. Die Nanoröhrchen 2 besitzen ein festes Ende, welches fest mit dem Träger 1 verbunden ist und ein freies Ende, welches im Wesentlichen vom Träger 1 weg weist. Die Beschichtung erfolgt in einer ersten Beschichtungsstation 11.

In einer der Beschichtungsstation 11 in einer Transportrichtung des Trägers 1 nachgeordneten Umformstation 2 wird der zweite Prozessschritt B durchgeführt. Mittels eines Laserstrahls eines Xenon-Lasers wird die in dem ersten Prozessschritt A auf den Träger aufgebrachte Schicht der Nano-Filamente 2 mit Lichtenergie beaufschlagt. Diese Lichtbeaufschlagung führt überraschenderweise dazu, dass sich die Nano-Filamente 2 bündelartig zusammenziehen. Die freien Enden der im Wesentlichen gleichmäßig über die Fläche des Trägers 1 angeordneten Nano-Filamente 2 orientieren sich zu eng benachbart stehenden Bündeln 3, so dass sich zwischen benachbarten Bündeln 3 Abstandsfreiräume 6 ausbilden. Die in Erstreckungsrichtung der Nano-Filamente 2 gemessene Länge der Bündel 3 ist größer als eine Querschnittsstrecke durch das Bündel 3 im Bereich der festen Enden der Nano-Filamente 2. Im Bereich der freien Enden der Nano-Filamente 2, die in den Bündeln 3 in Anlage zu benachbarten Nano-Filamenten 2 liegen, hat eine charakteristische Querschnittserstreckungslänge einen Wert von weniger als der Hälfte der Querschnittserstreckungslänge des Bündels im Bereich der festen Enden der Nano-Filamente 2.

In einem dritten Verfahrensschritt C, in einer Nanopartikel-Aufbringstation 14 werden in einem trockenen oder feuchten Sprühverfahren Silizium-Nanopartikel 4 auf die Bündel aufgesprüht. Die Silizium-Nanopartikel 4 gelangen teilweise in die Bündel 4 und in die Zwischenräume zwischen den Bündeln hinein.

Die Nanopartikel-Aufbringstation 14 ist Teil einer zweiten Beschichtungsstation 13, in der auch ein vierter Verfahrensschritt D durchgeführt wird, bei dem die auf die Bündel 3 aufgebrachten Nanopartikel 4 miteinander versintern. Hierzu werden in einer Anschmelzstation 15 die mit Nanopartikeln 4 besprühten Bündel 3 mit Energie beaufschlagt. Die Energie wird bevorzugt in Form von Licht auf die Bündel 3 gebracht, wobei das Licht infrarotes Licht, sichtbares Licht oder UV sein kann. Es ist aber auch möglich die Energie in Form von Wärme anzuwenden. In dem vierten Prozessschritt D werden die Nanopartikel 4 miteinander durch Aufschmelzen mittels der zugeführten Strahlungsenergie verbunden.

Die Figur 2 zeigt ein erstes Ausführungsbeispiel zur Durchführung des Verfahrens, wobei hier ein Träger 1 beidseitig mit Nano-Filamenten 2 beschichtet wird. Hierzu besitzt die Vorrichtung eine Eintrittseinrichtung 22, bei der es sich um ein gasdichtes Tor handeln kann, durch das der Träger 1 in die Vorrichtung 10 eingeleitet wird. Die Vorrichtung besitzt eine erste Beschichtungsstation 11, die in einem Gehäuse 24 angeordnet ist. In dem Gehäuse befinden sich zwei Heizer 16, mit denen eine Prozesskammer der Beschichtungsstation 11 auf eine Prozesstemperatur aufgeheizt wird. In der Prozesskammer befinden sich auf jeder Seite des flachen elektrisch leitenden Trägers 1 ein Gaseinlassorgan 17, durch welches Prozessgase in die Prozesskammer eingespeist werden. Aufgrund einer pyrolytischen Reaktion wachsen auf den kontinuierlich durch die Beschichtungsstation 11 transportierten Träger 1 Nano-Filamente 2. Auf den beiden voneinander wegweisenden Seiten des Trägers 1 befindet sich je ein Heizer 16 und ein Gaseinlassorgan 17, so dass der Träger 1 beidseitig beschichtet wird.

Durch ein gasgespültes Tor 9 wird der mit den Nano-Filamenten 2 versehene Träger 1 in ein weiteres Gehäuse 25, welches einer Umformstation 12 zugeordnet ist geleitet. In dem Gehäuse 25 befinden sich zwei Laseranordnungen, die die beiden voneinander wegweisenden Breitseiten des elektrisch leitenden Trägers 1, die jeweils mit Nano-Filamenten 2 beschichtet sind, mit Licht beaufschlagen. Das Licht stammt aus einer Xenon-Lampe oder eines Lasers und besitzt eine derartige Dosierung, dass sich aufgrund der Energiebeaufschlagung durch das Laserlicht die Nano-Filamente 2 zu Bündeln 3 selbst orientieren. Dabei entstehen Bündel 3, wie sie auch in den eingangs zitierten Papern "Behavior of fluids in nanoscopic space" oder "Capillarity-driven assembly of two-dimensional cellular carbon nanotube foams" dargestellt sind.

Durch ein weiteres gasgespültes Tor 9 wird der elektrisch leitende Träger 1 in eine zweite Beschichtungsstation 13 transportiert. In dem in der Figur 2 dargestellten Ausführungsbeispiel besteht die zweite Beschichtungsstation 13 aus einer Nanopartikel-Aufbringstation 14 und einer dieser nachgeordneten Anschmelzstation 15. Die Beschichtungsstation 13 weist ein Gehäuse 26 auf.

Die Nanopartikel-Aufbringstation 14 besitzt Heizer 19, die ebenso wie die Heizer 16 auf beiden Seiten des Trägers 1 angeordnet sind. Mit diesen Heizern wird eine Prozesskammer der Nanopartikel-Aufbringstation 14 auf eine Temperatur zwischen Raumtemperatur und 250° C aufgeheizt.

Die Prozesskammer weist darüber hinaus Sprühdüsen 20 oder ein Gaseinlassorgan 20 auf, mit dem insbesondere mittels eines Trägergases Nanopartikel 4 in die Prozesskammer und zwar in Richtung auf eine Breitseitenfläche des Trägers 1 transportiert werden können. Die Nanopartikel 4 legen sich auf die in den Bündeln 3 gebündelten Nano-Filamente 2 bzw. gelangen in das Innere der Bündel 3. Es bildet sich ein lockerer, Hohlräume aufweisender Verbund von Nanopartikeln 4 mit Nano-Filamenten 2. Die Heizung 19 und die Sprühdüsen 20 sind im selben Gehäuse 26 angeordnet.

Durch ein weiteres gasgespültes Tor 9 wird der so vorbereitete Träger 1 in die Anschmelzstation 15 gebracht, in der die beiden Breitseiten des Trägers 1 derart mit Laserlicht eines Lasers 21 oder mit Licht einer Xenon-Lampe beaufschlagt werden, dass benachbarte Nanopartikel 4 aneinander anschmelzen und/oder dass Nanopartikel 4 sich mit den Nano-Filamenten 2 verbinden. Es entsteht dabei ein poröser Körper mit einer Vielzahl von Hohlräumen, der in der Lage ist Lithium-Ionen, die sich in Lösung befinden, aufzunehmen. Die Anschmelzstation 15 besitzt ein eigenes Gehäuse 27.

Das in der Figur 2 dargestellte Ausführungsbeispiel besitzt drei in Transportrichtung des elektrisch leitenden Trägers 1 hintereinander angeordnete Gehäuse 24, 25, 26, 27, wobei in jedem der Gehäuse 24, 25, 26, 27 einer der vier Bearbeitungsschritte A, B, C, D durchgeführt wird. Die Gehäuse 24, 25, 26, 27 sind mittels gasgespülter Tore 9 miteinander verbunden.

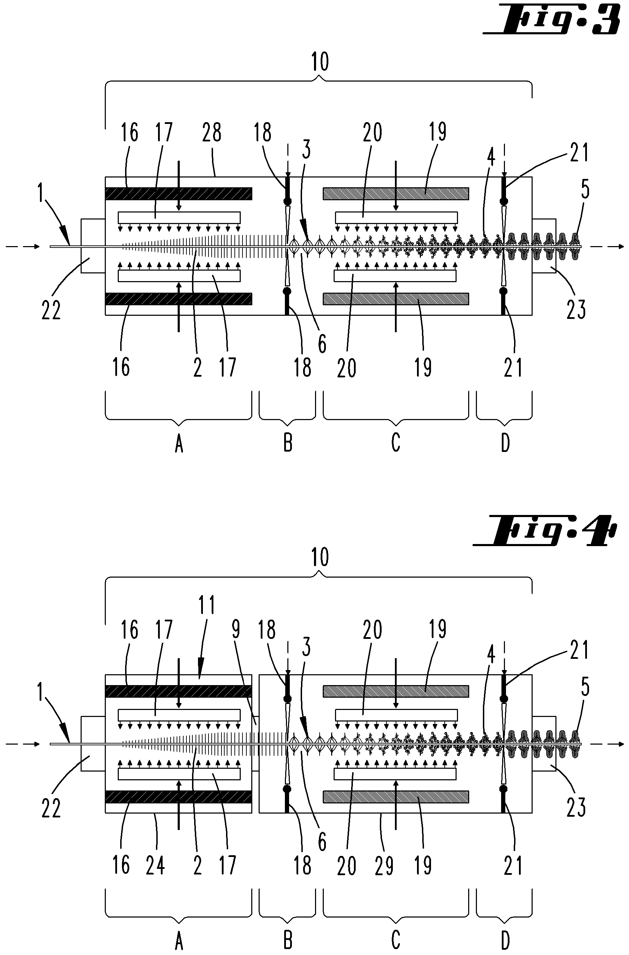

Die Figur 3 zeigt ein zweites Ausführungsbeispiel der Erfindung, bei der sämtliche Bearbeitungsstationen in einem Gehäuse angeordnet sind. Die Heizungen 16, die Gaseinlassorgane 17, der Xenon-Laser 18, die Heizorgane 19 und die Sprüheinrichtung 20 liegen zusammen mit dem Laser 21 in einem gemeinsamen Gehäuse. Lediglich die Eintrittseinrichtung 22 und die Austrittseinrichtung 23 bilden gasgespülte Tore, durch die der Träger 1 in die Vorrichtung 10 hinein- und aus der Vorrichtung 10 wieder herausgefördert wird.

Bei dem in der Figur 4 dargestellten Ausführungsbeispiel besteht die Vorrichtung 10 aus zwei Gehäuseteilen, die mit einem gasgespülten Tor 9 miteinander verbunden sind. Der erste Bearbeitungsschritt A wird in einem Gehäuse 16 durchgeführt, der zweite, dritte und vierte Bearbeitungsschritt B, C, D werden in einem zweiten Gehäuse 29 durchgeführt.

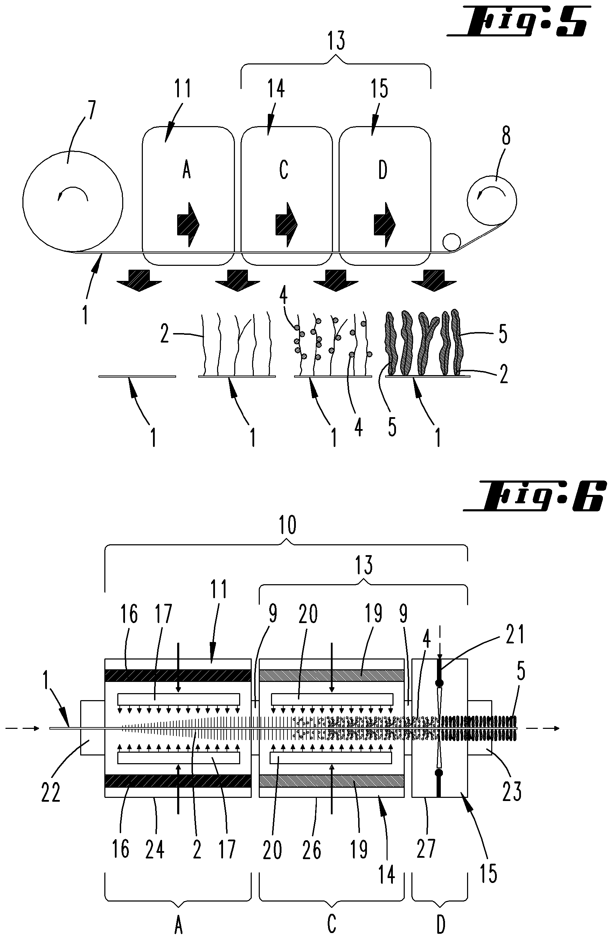

Die in den Figuren 5 und 6 dargestellte Variante eines Systems zur Herstellung einer Elektrode einer Lithium-Ionenzelle beinhaltet ein Verfahren, bei dem ein elektrisch leitender Träger 1 von einer ersten Rolle 7 abgewickelt wird. In einem Prozessschritt A werden Nano-Filamente 2 auf dem Träger 1 abgeschieden. In einem Prozessschritt C werden Nanopartikel 4 auf die Nano-Filamente 2 aufgebracht. In einem Prozessschritt D werden die Nanopartikel 4 zu einer Belegung 5 durch Anschmelzen miteinander verbunden. Die Nanopartikel verbinden sich dabei auch mit den Nano-Filamenten 2. Der Träger 1 kann vorbehandelt sein. Er kann bspw. auf seiner Oberfläche eine Keimstruktur aufweisen, die die Eigenschaft besitzt, dass Nano-Filamente 2 nur auf vorbestimmten Zonen des Trägers 1 aufwachsen. Bei den Zonen kann es sich um inselförmige, über die Breitseitenfläche gleich verteilte Mikrozonen handeln, die durch einen Abstandsraum voneinander getrennt sind.

Die im Prozessschritt A abgeschiedenen Nano-Filamente 2 können insbesondere auch vereinzelt stehen. Sie können derart weit voneinander beabstandet sein, dass sich benachbarte Nano-Filamente 2 nicht berühren. Es kann sich auch um verästelte Nano-Filamente 2 handeln.

Die zur Durchführung dieses Verfahrens erforderliche Vorrichtung kann bis auf die Umformungsstation 12 sämtliche Bearbeitungsstationen aufweisen, die auch die in den Figuren 2 bis 4 dargestellten Vorrichtungen aufweisen. Insbesondere betrifft die Erfindung eine Vorrichtung, wie sie in der Figur 6 dargestellt ist. Es ist eine Eintrittseinrichtung 22 vorgesehen, durch die der elektrisch leitende Träger in die Vorrichtung 10 eintritt. Aus einer Austrittseinrichtung 23 tritt der elektrisch leitende Träger 1 wieder heraus. Die Eintrittseinrichtung 22 und die Austrittseinrichtung 23 können gasgespülte Tore sein. In einer Transportrichtung, in der der Träger 1 transportiert wird, schließt sich an die Eintrittseinrichtung 22 eine Beschichtungsstation 11 an. Die Beschichtungsstation 11 besitzt ein Gehäuse 24, in dem sich zwei Heizer 16 und zwei zwischen den Heizern angeordnete Gaseinlassorgane 17 befinden. Durch den Zwischenraum zwischen den beiden Gaseinlassorganen 17 wird der elektrisch leitende Träger 1 transportiert.

An das Gehäuse 24 schließt sich ein gasgespültes Tor 9 an, durch das der Träger 1 hindurchtransportiert wird.

An das gasgespülte Tor 9 schließt sich ein weiteres Gehäuse 26 an. Das Gehäuse 26 kann aber auch direkt mit dem Gehäuse 24 verbunden sein.

In dem Gehäuse 26 befinden sich zwei Heizer 19. Zwischen den beiden Heizern 19 befinden sich zwei Düsenanordnungen 20. Durch den Raum zwischen den beiden Düsenanordnungen 20 wird der Träger 1 hindurchgeleitet. Das Gehäuse 26 beinhaltet die oben erläuterte Nanopartikel-Aufbringstation 14.

An das Gehäuse 26 schließt sich ein gasgespültes Tor 9 an, durch das der Träger hindurchgeleitet wird. An das gasgespülte Tor 9 schließt sich ein weiteres Gehäuse 27 an, in dem eine Anschmelzstation 15 angeordnet ist, die einen Laser 21 aufweist. Das Gehäuse 27 kann sich aber auch unmittelbar an das Gehäuse 26 anschließen.

In der Anschmelzstation 15 wird der Träger 1 beidseitig mit einem Laserstrahl 21 energiebeaufschlagt, so dass die in der Nanopartikel-Aufbringstation 14 auf die Filamente 2 abgeschiedenen Nanopartikel 4 sich untereinander und/oder mit den Nano-Filamenten 2 verbinden.

Die Austrittseinrichtung 23 schließt sich unmittelbar an das Gehäuse 27 an.

Bei dem zuletzt erörterten Verfahren bzw. bei der Vorrichtung zur Durchführung dieses Verfahrens werden die Nanopartikel 4 unmittelbar auf die Nano-Filamente 2 aufgebracht. Eine vorherige Bündelung der Nano-Filamente 2 ist hier nicht vorgesehen.

In in den Zeichnungen nicht dargestellten Varianten wird der Träger 1 lediglich einseitig mit der zuvor beschriebenen mit Nanopartikeln 4 belegter Filamentschicht versehen. Die diesbezüglich verwendete Vorrichtung besitzt dann nur die Elemente, die in den Zeichnungen oberhalb oder unterhalb des Trägers 1 dargestellt sind. Mit zwei derartigen Vorrichtungen kann ein Träger 1 aber auch beidseitig mit den mit Nanopartikeln 4 belegten Nano-Filamenten 2 beschichtet werden, indem zunächst eine erste Breitseitenfläche des Trägers 1 und danach die zweite Breitseitenfläche des Trägers 1 mit den mit Nanopartikeln 4 belegten Filamenten 2 beschichtet werden.

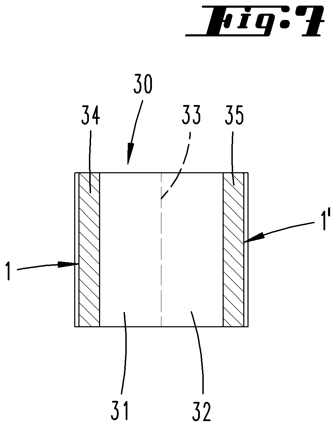

Mit dem erfindungsgemäßen Verfahren kann in der erfindungsgemäßen Vorrichtung eine Elektrode 34, 35 gefertigt werden, wie sie in einer Lithium-Ionen-Zelle zur Anwendung kommt, wie sie schematisch in der Figur 7 dargestellt ist. Auf sich gegenüberliegenden Seiten einer Akkumulatorzelle 30 befinden sich zwei Elektroden 34, 35. Zwischen den Elektroden 34, 35 befindet sich eine poröse Wand 33. Die Volumina 31, 32 enthalten ein Elektrolyt, welches Lithium-Ionen beinhaltet.

Die zunächst gleichmäßig verteilt und im Wesentlichen strukturlos auf den Träger 1 aufgebrachten Nano-Filamente 2 werden erfindungsgemäß zu Bündeln 3 zusammengeformt. Eine Gruppe von unmittelbar benachbarten Nano-Filamenten 2 wird dabei auf ein gemeinsames Zentrum gerichtet. Benachbarte Bündel besitzen jeweils auf ein gemeinsames Zentrum gerichtete Nano-Filamente 2, sodass die Nano-Filamente 2 benachbarter Bündel von einem Abstandsraum 6 weggerichtet sind, der sich zwischen mehreren Bündeln 3 befindet.

In einem darauf folgenden Fertigungsschritt erhalten die Bündel 3 einen Überzug aus Silizium-Nanopartikeln 4. Jeweils ein Bündel 3 kann dabei einen derartigen Überzug besitzen, wobei die Überzüge aus Silizium-Nanopartikeln voneinander beabstandet sind.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, nämlich:

Eine Vorrichtung, die dadurch gekennzeichnet ist, dass die Nano-Filamente 2 zu einer Vielzahl von jeweils eine Mehrzahl von Nano-Filamenten 2 aufweisenden Bündeln 3 zusammengeformt sind, wobei zwischen benachbarten Bündeln 3 ein Abstandsraum 6 ausgebildet ist.

Ein Verfahren mit zumindest folgenden Verfahrensschritten:
- Bereitstellen eines elektrisch leitenden Trägers 1;
- Aufbringen einer Schicht im statistischen Mittel gleichmäßig über die Oberfläche des Trägers 1 angeordneter Nano-Filamente 2;
- Zusammenformen jeweils einer Vielzahl von Nano-Filamenten 2 zu Bündeln 3, so dass zwischen benachbarten Bündeln 3 ein Abstandsraum 6 verbleibt;
- Aufbringen einer Ionen aufnehmenden Belegung 5 auf die Bündel 3.

Ein Verfahren, das dadurch gekennzeichnet ist, dass die Nano-Filamente 2 mit Licht beaufschlagt werden.

Eine Vorrichtung oder ein Verfahren, die oder das dadurch gekennzeichnet ist, dass die Nano-Filamente 2 Kohlenstoff-Nanoröhrchen CNT sind.

Eine Vorrichtung oder ein Verfahren, die oder das dadurch gekennzeichnet ist, dass eine Querschnittsstrecke durch ein Bündel 3 0,5 bis 5 µm bzw. 1,5 bis 2,5 µm beträgt.

Eine Vorrichtung oder ein Verfahren, die oder das dadurch gekennzeichnet ist, dass die Ionen aufnehmende Belegung 5 von untereinander und mit den Bündeln aus Nano-Filamenten 2 verbundenen Nanopartikeln 4 gebildet ist.

Eine Vorrichtung oder ein Verfahren, die oder das dadurch gekennzeichnet ist, dass die Nanopartikel 4 Silizium, Schwefel, Titanoxyd, ein Phosphit, ein Nitrit oder Kohlenstoff und insbesondere SiO₂, TiO₂, CrO₂, S, LiCoO, LiTiO, LiNiO, LiMnO, LiFePO, LiCoPO, LiMnPO, V₂O₅, Ge, Sn, Pb, ZnO aufweisen.

Ein Verfahren, das dadurch gekennzeichnet ist, dass die auf den Träger 1 aufgebrachten Nano-Filamente 2 durch Belichten zu Bündeln 3 geformt werden.

Ein Verfahren, das dadurch gekennzeichnet ist, dass die Schicht der Nano-Filamente 2 mit einer Xenon-Lampe oder einem Laser belichtet wird.

Ein Verfahren, das dadurch gekennzeichnet ist, dass zur Belichtung der Schicht der Nano-Filamente 2 ein zu einem Streifen aufgeweiteter, kontinuierlich oder gepulst erzeugter Laserstrahl verwendet wird, wobei der Laserstrahl mit bevorzugt einer gleichmäßigen Geschwindigkeit über die Schicht wandert.

Ein Verfahren, das dadurch gekennzeichnet ist, dass beim Aufbringen der Belegung 5 Silizium-Nanopartikel 4 auf die Bündel 3 aufgebracht, insbesondere aufgesprüht werden, die mittels Energiebeaufschlagung untereinander und mit den darunter liegenden Bündeln aus Nano-Filamenten 2 verbunden werden.

Ein Verfahren, das dadurch gekennzeichnet ist, dass zur Verbindung der Nanopartikel 4 untereinander und/oder mit den darunter liegenden Bündeln aus Nano-Filamenten 2 Licht insbesondere eines Laserstrahls verwendet wird, das über die Oberfläche des Trägers wandert, so dass zumindest die Oberfläche der Nanopartikel 4 anschmilzt.

Einen Akkumulator, der dadurch gekennzeichnet ist, dass die erste und/oder zweite Elektrode 34, 35 gemäß einem der vorhergehenden Merkmale ausgebildet ist.

Eine Vorrichtung bei welcher zumindest folgende Bearbeitungsstationen der Bearbeitungseinrichtung 10 in Transportrichtung unmittelbar hintereinander angeordnet sind:
- Eine erste Beschichtungsstation 11, in der Nano-Filamente 2 auf den Träger 1 aufgebracht werden;
- Eine zweite Beschichtungsstation 13, in der die Nano-Filamente 2 mit einer Ionen aufnehmenden Belegung 5 versehen werden.

Eine Vorrichtung, die dadurch gekennzeichnet ist, dass zwischen der ersten Beschichtungsstation 11 und der zweiten Beschichtungsstation 13 eine Umformungsstation 12 vorgesehen ist, in der die Nano-Filamente 2 zu Bündeln 3 zusammengeformt werden, welche Bündel 3 in der zweiten Beschichtungsstation 13 mit der Belegung 5 versehen werden.

Eine Vorrichtung, die dadurch gekennzeichnet ist, dass eine erste Rolle 7 vorgesehen ist, auf der der Träger 1 aufgewickelt ist, welcher durch die Bearbeitungseinrichtung 10 von der Eintrittseinrichtung 22 bis zur Austrittseinrichtung 23 durchläuft und in einer Transportrichtung hinter der Austrittseinrichtung 23 auf einer zweiten Rolle 8 aufgewickelt wird.

Eine Vorrichtung, die dadurch gekennzeichnet ist, dass die Umformungsstation 12 eine Lichtquelle 18, insbesondere einen Laser aufweist, mit dem die in der ersten Beschichtungsstation 11 auf den Träger 1 aufgebrachte, Nano-Filamente 2 aufweisende Schicht derart belichtbar sind, dass sich eine Vielzahl von Nano-Filamenten 2 zu Bündeln 3 zusammenformen.

Eine Vorrichtung, die dadurch gekennzeichnet ist, dass die zweite Beschichtungsstation 13 eine Sprüheinrichtung 20 aufweist, mit der Nanopartikel 4 auf die in der Umformungsstation erzeugten Bündel 3 aufgesprüht werden können.

Eine Vorrichtung, die dadurch gekennzeichnet ist, dass die zweite Beschichtungsstation 13 eine Lichtquelle 21, insbesondere einen Laser aufweist, mit dem die auf die Bündel 3 bzw. Nano-Filamente 2 aufgebrachten Nanopartikel 4 miteinander und mit den Nano-Filamenten 2 verbunden werden.

### Liste der Bezugszeichen

| | | | |
|---|---|---|---|
| 1 | elektrisch leitender Träger | 28 | Gehäuse |
| 2 | Nano-Filament | 29 | Gehäuse |
| 3 | Bündel | 30 | Akkumulatorzelle |
| 4 | Nanopartikel | 31 | Volumina |
| 5 | Belegung | 32 | Volumina |
| 6 | Abstandsraum | 33 | poröse Wand |
| 7 | erste Rolle | 34 | Elektrode |
| 8 | zweite Rolle | 35 | Elektrode |
| 9 | gasgespültes Tor | | |
| 10 | Vorrichtung | | |
| 11 | Beschichtungsstation | | |
| 12 | Umformungsstation | A | Prozessschritt/ Nano-Filament Wachstum |
| 13 | Beschichtungsstation | | |
| 14 | Nanopartikel-Aufbringstation | B | Prozessschritt/ Umformung |
| 15 | Anschmelzstation | | |
| 16 | Heizer | C | Prozessschritt/ Nanopartikelauftrag |
| 17 | Gaseinlassorgan | | |
| 18 | Laser | D | Prozessschritt/ Versintern |
| 19 | Heizer | | |
| 20 | Sprühdüsen | | |
| 21 | Laser | | |
| 22 | Eintrittseinrichtung | | |
| 23 | Austrittseinrichtung | | |
| 24 | Gehäuse | | |
| 25 | Gehäuse | | |
| 26 | Gehäuse | | |
| 27 | Gehäuse | | |

## Patentansprüche

1. Verfahren zum Umformen von gleichmäßig über die Oberfläche eines Trägers (1) angeordneten Nano-Filamenten (2), die jeweils ein festes mit dem Träger (1) verbundenes Ende und ein freies Ende aufweisen, zu Bündeln (3), so dass die freien Enden einer Mehrzahl benachbarter Nano-Filamente zusammengeformt aneinander anliegen und die Bündel (3) durch Abstandsräume voneinander getrennt sind, **dadurch gekennzeichnet, dass** die Nano-Filamente (2) mit dem Licht einer Xenon-Lampe oder eines Lasers mit einer derartigen Dosis belichtet werden, dass sich die Nano-Filamente als Folge einer Energiebeaufschlagung durch das Licht zu den Bündeln orientieren.

2. Verfahren nach Anspruch 1, **dadurch gekennzeichnet, dass** die Nano-Filamente (2) Kohlenstoff-Nanoröhrchen (CNT) sind.

3. Verfahren nach einem der vorhergehenden Ansprüche, **dadurch gekennzeichnet, dass** eine Querschnittsstrecke durch ein Bündel (3) 0,5 bis 5 µm bzw. 1,5 bis 2,5 µm beträgt.

4. Verfahren nach einem der vorhergehenden Ansprüche, **dadurch gekennzeichnet, dass** die Nano-Filamente 2 eine Ionen aufnehmende Belegung (5) aufweisen, die von untereinander und mit den Bündeln aus NanoFilamenten (2) verbundenen Nanopartikeln (4) gebildet ist.

5. Verfahren nach Anspruch 4, **dadurch gekennzeichnet, dass** die Nanopartikel (4) Silizium, Schwefel, Titanoxyd, ein Phosphit, ein Nitrit oder Kohlenstoff und insbesondere SiO₂, TiO₂, CrO₂, S, LiCoO, LiTiO, LiNiO, LiMnO, LiFePO, LiCoPO, LiMnPO, V₂O₅, Ge, Sn, Pb, ZnO aufweisen.

6. Verfahren nach einem der vorhergehenden Ansprüche, **dadurch gekennzeichnet, dass** zur Belichtung der Schicht der Nano-Filamente (2) ein zu einem Streifen aufgeweiteter, kontinuierlich oder gepulst erzeugter Laserstrahl verwendet wird, wobei der Laserstrahl mit bevorzugt einer gleichmäßigen Geschwindigkeit über die Schicht wandert.

7. Verfahren nach den Ansprüchen 4 oder 5, **dadurch gekennzeichnet, dass** beim Aufbringen der Belegung (5) Silizium-Nanopartikel (4) auf die Bündel (3) aufgebracht, insbesondere aufgesprüht werden, die mittels Energiebeaufschlagung untereinander und mit den darunter liegenden Bündeln aus Nano-Filamenten (2) verbunden werden.

8. Verfahren nach Anspruch 7, **dadurch gekennzeichnet, dass** zur Verbindung der Nanopartikel (4) untereinander und/oder mit den darunter liegenden Bündeln aus Nano-Filamenten (2) Licht insbesondere eines zweiten Laserstrahls verwendet wird, das über die Oberfläche des Trägers wandert, so dass zumindest die Oberfläche der Nanopartikel (4) anschmilzt.

9. Vorrichtung zur Durchführung des Verfahrens gemäß einem der vorhergehenden Ansprüche mit einer Eintrittseinrichtung (22) zum Zuführen eines elektrisch leitenden Trägers (1) in eine Bearbeitungseinrichtung (10), durch welche der Träger (1) mittels Transportmitteln in einer Transportrichtung bis zu einer Austrittseinrichtung (23), durch die der Träger (1) die Bearbeitungseinrichtung (10) verlässt, transportiert wird, mit einer ersten Beschichtungsstation (11), in der die Nano-Filamente (2) auf den Träger (1) aufgebracht werden, und mit einer Umformungsstation (12), in der die Nano-Filamente (2) zu Bündeln (3) zusammengeformt werden, **dadurch gekennzeichnet, dass** die Umformungsstation (12) eine Lichtquelle (18) in Form einer Xenon-Lampe oder eines Lasers aufweist, mit dem die in der ersten Beschichtungsstation (10) auf den Träger (1) aufgebrachte, die Nano-Filamente (2) aufweisende Schicht belichtbar ist, wobei die Nano-Filamente mit einer derartigen Dosis belichtet werden, dass sich die Nano-Filamente als Folge der Energiebeaufschlagung durch das Licht zu Bündeln orientieren.

10. Vorrichtung gemäß Anspruch 9, **gekennzeichnet durch** eine zweite Beschichtungsstation (13), die hinter der ersten Beschichtungsstation (10) angeordnet ist und mit der Nanopartikel (4) auf die in der Umformungsstation (12) erzeugten Bündel (3) aufgebracht werden.

11. Vorrichtung nach Anspruch 10, **dadurch gekennzeichnet, dass** die zweite Beschichtungsstation (13) eine Sprüheinrichtung (20) aufweist, mit der die Nanopartikel (4) auf die Bündel (3) aufgesprüht werden.

12. Vorrichtung nach einem der Ansprüche 10 oder 11 **dadurch gekennzeichnet, dass** die zweite Beschichtungsstation (13) eine Lichtquelle (21), insbesondere einen Laser aufweist, mit dem die auf die Bündel (3) beziehungsweise Nano-Filamente (2) aufgebrachten Nanopartikel (4) miteinander und mit den Nano-Filamenten (2) verbunden werden.

## Claims

1. A method of forming nano-filaments (2), which are arranged uniformly over the surface of a carrier (1) and which each have a fixed end connected to the carrier (1) and a free end, into bundles (3), so that the free ends of a plurality of adjacent nano-filaments lie against one another in a formed-together manner and the bundles (3) are separated from one another by spaces, **characterised in that** the nano-filaments (2) are exposed to the light of a xenon lamp or a laser at such a dose that the nano-filaments orient to the bundles as a result of energy application by the light.

2. The method according to claim 1, **characterised in that** the nano-filaments (2) are carbon nanotubes (CNT).

3. The method according to one of the preceding claims, **characterized in that** a cross-sectional distance through a bundle (3) respectively lies between 0.5 and 5 µm or between 1.5 and 2.5 µm.

4. The method according to any one of the preceding claims, **characterized in that** the nano-filaments (2) have an ion-absorbing coating (5) formed by nanoparticles (4) connected to one other and to the bundles of nano-filaments (2).

5. The method according to claim 4, **characterised in that** the nanoparticles (4) comprise silicon, sulphur, titanium oxide, a phosphite, a nitrite or carbon and SiO₂, TiO₂, CrO₂, S, LiCoO, LiTiO, LiNiO, LiMnO, LiFePO, LiCoPO, LiMnPO, V₂O₅, Ge, Sn, Pb, ZnO.

6. The method according to one of the preceding claims, **characterised in that** a laser beam, which is generated continuously or in a pulsed manner and expanded into a strip, is used for exposing the layer of nano-filaments (2) to light, wherein the laser beam preferably moves over the layer with a constant speed.

7. The method according to claims 4 or 5, **characterised in that** silicon nanoparticles (4) are applied to the bundles (3) during the application of the coating (5), wherein said silicon nanoparticles are connected to one another and to the nano-filaments (2) lying underneath the nanoparticles by applying energy thereto.

8. The method according to claim 7, **characterised in that** light, particularly the light of a laser beam, is used for connecting the nanoparticles (4) to one another and/or to the bundles of nano-filaments (2) lying underneath the nanoparticles, wherein said light moves over the surface of the substrate such that at least the surface of the nanoparticles (4) melts.

9. A device for carrying out the method according to one of the preceding claims, having an entry arrangement (22) for feeding an electrically conductive substrate (1) into a processing device (10), through which the substrate (1) is transported by means of transport means in a transport direction as far as an exit arrangement (23), through which the substrate (1) leaves the processing device (10), having a first coating station (11), in which the nano-filaments (2) are applied to the substrate (1), and with a forming station (12) in which the nano-filaments (2) are formed into bundles (3), **characterized in that** the forming station (12) has a light source (18) in the form of a xenon lamp or a laser with which the layer comprising the nano-filaments (2) applied to the substrate (1) in the first processing device (10) can be exposed to light, the nano-filaments being exposed to such a dose that the nano-filaments orient themselves into bundles as a result of the energy application by the light.

10. The device according to claim 9, **characterised by** a second coating station (13) arranged downstream of the first processing device (10) and used to apply nanoparticles (4) to the bundles (3) produced in the forming station (12).

11. The device according to claim 10, **characterized in that** the second coating station (13) comprises a spraying device (20) with which the nanoparticles (4) are sprayed onto the bundles (3).

12. The device according to any one of claims 10 or 11, **characterized in that** the second coating station (13) comprises a light source (21), in particular a laser, with which the nanoparticles (4) applied to the bundles (3) or nano-filaments (2) are connected to one other and to the nano-filaments (2).

## Revendications

1. Procédé de fabrication de nanofilaments (2) disposés uniformément sur la surface d'un support (1), qui comportent respectivement une extrémité fixe reliée au support (1) et une extrémité libre, en faisceaux (3) de telle manière que les extrémités libres d'une pluralité de nanofilaments voisins s'appliquent les unes aux autres conjointement formées et les faisceaux (3) sont séparés les uns des autres par des espaces d'écartement, **caractérisé en ce que** les nanofilaments (2) sont exposés à la lumière d'une lampe au xénon ou d'un laser avec une dose de telle nature que les nanofilaments s'orientent en faisceaux par suite d'une application d'énergie par la lumière.

2. Procédé selon la revendication 1, **caractérisé en ce que** les nanofilaments (2) sont des nanotubes de carbone (CNT) .

3. Procédé selon l'une quelconque des revendications précédentes, **caractérisé en ce qu'**une distance de section à travers un faisceau (3) est de 0,5 à 5 µm ou 1,5 à 2,5 µm.

4. Procédé selon l'une quelconque des revendications précédentes, **caractérisé en ce que** les nanofilaments (2) comportent une couverture (5) recevant des ions, qui est formée de nanoparticules (4) reliées entre elles et aux faisceaux de nanofilaments (2).

5. Procédé selon la revendication 4, **caractérisé en ce que** les nanoparticules (4) comportent du silicium, du soufre, de l'oxyde de titane, un phosphite, un nitrite ou du carbone et en particulier du SiO₂, du TiO₂, du CrO₂, du S, du LiCoO, du LiTiO, du LiNiO, du LiMnO, du LiFePO, du LiCoPO, du LiMnPO, du V₂O₅, du Ge, du Sn, du Pb, du ZnO.

6. Procédé selon l'une quelconque des revendications précédentes, **caractérisé en ce qu'**un rayon de laser produit en continu ou pulsé, étendu en une bande est utilisé pour l'éclairage de la couche de nanofilaments (2), sachant que le rayon de laser se déplace sur la couche de préférence à une vitesse régulière.

7. Procédé selon les revendications 4 ou 5, **caractérisé en ce que** des nanoparticules de silicium (4) sont appliquées, en particulier pulvérisées sur les faisceaux (3) lors de l'application de la couverture (5), qui sont reliées entre elles et aux faisceaux de nanofilaments (2) situés en dessous au moyen d'une application d'énergie.

8. Procédé selon la revendication 7, **caractérisé en ce qu'on** utilise de la lumière en particulier d'un deuxième rayon de laser pour la liaison des nanoparticules (4) entre elles et/ou avec les faisceaux de nanofilaments (2) situés en dessous, qui se déplace à la surface du support de telle manière qu'au moins la surface des nanoparticules (4) fonde.

9. Dispositif servant à l'exécution du procédé selon l'une quelconque des revendications précédentes avec un système d'entrée (22) pour l'acheminement d'un support électroconducteur (1) dans un système de traitement (10) à travers lequel le support (1) est transporté au moyen de moyens de transport dans une direction de transport jusqu'à un système de sortie (23) à travers lequel le support (1) quitte le système de traitement (10), avec un premier poste de revêtement (11) dans lequel les nanofilaments (2) sont appliqués sur le support (1) et avec un poste de fabrication (12) dans lequel les nanofilaments (2) sont conjointement formés en faisceaux (3), **caractérisé en ce que** le poste de fabrication (12) comporte une source lumineuse (18) sous la forme d'une lampe au xénon ou d'un laser, avec lequel la couche comportant les nanofilaments (2) appliquée sur le support (1) dans le premier poste de revêtement (10), peut être exposée à la lumière, sachant que les nanofilaments sont exposés à la lumière avec une dose telle que les nanofilaments s'orientent en faisceaux par suite d'une application d'énergie par la lumière.

10. Dispositif selon la revendication 9, **caractérisé par** un deuxième poste de revêtement (13), qui est disposé derrière le premier poste de revêtement (10) et avec lequel les nanoparticules (4) sont appliquées aux faisceaux (3) produits dans le poste de fabrication (12) .

11. Dispositif selon la revendication 10, **caractérisé en ce que** le deuxième poste de revêtement (13) comporte un système de pulvérisation (20) avec lequel les nanoparticules (4) sont pulvérisées sur les faisceaux (3) .

12. Dispositif selon l'une quelconque des revendications 10 ou 11, **caractérisé en ce que** le deuxième poste de revêtement (13) comporte une source lumineuse (21), en particulier un laser avec lequel les nanoparticules (4) appliquées aux faisceaux (3), ou aux nanofilaments (2), sont reliées entre elles et aux nanofilaments (2).
